# EUROPÄISCHE PATENTANMELDUNG

(11) **EP 1 400 393 A1**
(43) Veröffentlichungstag der Anmeldung: **24.03.2004**
(21) Anmeldenummer: 03021255.9
(22) Anmeldetag: 18.09.2003
(51) Int. Cl.: B60L 1/02, B60L 15/20

(54) **Verfahren zur Versorgung von in einem Eisenbahnzug vorhandenen Zusatzgeräten mit elektrischer Energie**

(30) Priorität: 20.09.2002 DE 10243857
(71) Anmelder: SIEMENS AKTIENGESELLSCHAFT, 80333 München (DE)
(72) Erfinder: Geyer, Thomas, 90522 Oberasbach (DE); Wöhl, Peter, 86152 Augsburg (DE)

(57) **Zusammenfassung**

Die Erfindung betrifft ein Verfahren zur Versorgung von in einem Eisenbahnzug, insbesondere in einem Reisezug, vorhandenen Zusatzgeräten mit elektrischer Energie aus einem Stromkreis für eine Traktionseinrichtung aus einem oder mehreren Traktionselektromotoren. Diese Traktionseinrichtung ist insbesondere Teil eines dieselelektrischen Zugantriebes. Es ist vorgesehen, dass die Versorgung der Zusatzgeräte mit elektrischer Energie in Abhängigkeit vom Energiebedarf der Traktionseinrichtung gesteuert wird.

## Beschreibung

Die Erfindung betrifft ein Verfahren zur Versorgung von in einem Eisenbahnzug, insbesondere in einem Reisezug, vorhandenen Zusatzgeräten mit elektrischer Energie aus einem Stromkreis für eine Traktionseinrichtung aus einem oder mehreren Traktionselektromotoren, die Teil eines Zugantriebes, insbesondere eines dieselelektrischen Zugantriebes ist.

Die Traktionseinrichtung kann also ein Traktionselektromotor sein. In der Regel besteht die Traktionseinrichtung aber aus mehreren Traktionselektromotoren, die gemeinsam den Eisenbahnzug antreiben.

Zusatzgeräte in einem Eisenbahnzug sind solche Geräte und Anlagen, die nicht direkt mit dem Fahren des Zuges in Verbindung stehen. Zusatzgeräte sind also nicht Antriebs- und Bremsvorrichtungen. Beispiele für solche Zusatzgeräte sind die Beleuchtung, die Klimaanlage oder die Heizung des Zuges.

Häufig werden diese Zusatzgeräte durch besondere Aggregate mit elektrischer Energie versorgt. Es ist aber auch schon vorgeschlagen worden, die Zusatzgeräte mit dem Stromkreis zu speisen, der auch die Traktionseinrichtung des Zugantriebes versorgt. Insbesondere ist eine solche Energieversorgung bereits bei dieselelektrisch angetriebenen Zügen eingesetzt worden.

Der Einsatz eines Teiles der für die Traktion vorgesehenen elektrischen Energie für die Zusatzgeräte hat den Nachteil, dass in der Anfahrphase die Beschleunigung geringer ausfällt, falls Zusatzgeräte, wie z.B. eine Heizung, eingeschaltet sind. Während einer gleichmäßigen Fahrt oder sogar beim Bremsen reicht die trotz eingeschalteter Zusatzgeräte für die Traktionseinrichtung bereitstehende elektrische Energie aber stets aus.

Der Erfindung liegt die Aufgabe zugrunde, ein Verfahren zur Versorgung von Zusatzgeräten mit elektrischer Energie anzugeben, das mit einfachen Mitteln auskommt und trotzdem beim Beschleunigen des Zuges die Traktionsleistung nicht beeinträchtigt.

Die Aufgabe wird gemäß der Erfindung dadurch gelöst, dass die Versorgung der Zusatzgeräte mit elektrischer Energie in Abhängigkeit vom Energiebedarf der Traktionseinrichtung gesteuert wird.

Dabei wird darauf geachtet, dass die Versorgung der Traktionseinrichtung mit elektrischer Energie der Versorgung von Zusatzgeräten stets vorgeht. Dadurch wird die zur Verfügung stehende elektrische Energie besser ausgenutzt.

Bei dieselelektrischen Triebfahrzeugen wird die Leistung des Dieselmotores besser ausgenutzt.

Beispielsweise wird während der Beschleunigung des Zuges die Versorgung der Zusatzgeräte mit elektrischer Energie verringert, da dann der höchste Bedarf an elektrischer Energie für die Traktionseinrichtung vorhanden ist.

Es wird also zu Gunsten einer hohen Beschleunigung beim Anfahren kurzzeitig auf den Betrieb von Zusatzgeräten, wie Heizung oder Klimaanlage im Zug verzichtet. Das kurzzeitige Abschalten von Heizung und Klimaanlage während einer Beschleunigungsphase des Zuges beeinträchtigt den Komfort der Fahrgäste nicht.

Beispielsweise werden die Zusatzgeräte, wenn der Zug nicht beschleunigt wird, nach ihrem Bedarf mit elektrischer Energie versorgt. Das ist auf wirtschaftliche Weise stets möglich, da insbesondere bei einem dieselelektrischen Antrieb die vom gleichmäßig laufenden Dieselmotor bereitgestellte Energie, wenn nicht beschleunigt wird, sowohl für den Energiebedarf der Traktionseinrichtung als auch für den Energiebedarf der vorhandenen Zusatzgeräte stets ausreicht.

Nach einem anderen Beispiel werden die Zusatzgeräte, wenn der Zug nicht beschleunigt wird, mit erhöhter Leistung betrieben. Das ist insbesondere bei einem dieselelektrischen Antrieb mit gleichmäßig laufendem Dieselmotor möglich, da der Überschuss an elektrischer Energie, der nicht für die Traktionseinrichtung benötigt wird, auch für eine erhöhte Leistung der Zusatzgeräte ausreicht. Vorteilhafterweise kann also z.B. durch eine erhöhte Leistung der Heizung in einem Reisezug ein mögliches wenn auch geringes Defizit beim Heizen, das sich während der Beschleunigung des Zuges eingestellt haben könnte, schnell ausgeglichen werden.

Beispielsweise wird beim Bremsen des Zuges die in der Traktionseinrichtung, also in einem oder mehreren Traktionselektromotoren, generatorisch erzeugte elektrische Energie zur Versorgung der Zusatzgeräte bereitgestellt. Damit wird der Vorteil erzielt, dass die beim Bremsen erzeugte elektrische Energie sinnvoll eingesetzt wird. Sie muss nicht einem Bremswiderstand zugeführt werden. Eine Rückspeisung ist im übrigen bei einem dieselelektrischen Antrieb nicht möglich.

Insbesondere bei einem dieselelektrischen Antrieb wird weniger Primärenergie, also weniger Dieselöl verbraucht als bei nichtgesteuerter Energieversorgung der Zusatzgeräte. Es ergibt sich dadurch außer einer Kostenersparnis auch eine geringere thermische Belastung und ein weniger störanfälliger Betrieb.

Das Steuern erfolgt beispielsweise über ein Steuergerät, das über Funk und/oder über eine Signalleitung Signale von einer Steuereinheit der Traktionseinrichtung erhält. Die Signalleitung kann eine Zugbusleitung oder ein UIC-Kabel sein. Auf diese Weise wird der Bedarf an elektrischer Energie für die Traktionseinrichtung zuverlässig dem Steuergerät, das den Zusatzgeräten zugeordnet ist, übermittelt.

Mit dem Verfahren nach der Erfindung zur Versorgung von in einem Eisenbahnzug vorhandenen Zusatzgeräten wird insbesondere der Vorteil erzielt, dass die bereitgestellte elektrische Energie, insbesondere bei einem dieselelektrischen Antrieb, besonders wirtschaftlich auf den Antrieb und auf die Zusatzgeräte, wie z.B. die Heizung, verteilt wird und dass außerdem beim Bremsen erzeugte elektrische Energie für die Zusatzgeräte Verwendung finden kann.

## Patentansprüche

1. Verfahren zur Versorgung von in einem Eisenbahnzug, insbesondere in einem Reisezug, vorhandenen Zusatzgeräten mit elektrischer Energie aus einem Stromkreis für eine Traktionseinrichtung aus einem oder mehreren Traktionselektromotoren, die Teil eines Zugantriebes, insbesondere eines dieselelektrischen Zugantriebes, ist,
**dadurch gekennzeichnet, dass** die Versorgung der Zusatzgeräte mit elektrischer Energie in Abhängigkeit vom Energiebedarf der Traktionseinrichtung gesteuert wird.

2. Verfahren nach Anspruch 1,
**dadurch gekennzeichnet, dass** während der Beschleunigung des Zuges die Versorgung der Zusatzgeräte mit elektrischer Energie verringert wird.

3. Verfahren nach einem der Ansprüche 1 oder 2,
**dadurch gekennzeichnet, dass**, wenn der Zug nicht beschleunigt wird, die Zusatzgeräte nach ihrem Bedarf mit elektrischer Energie versorgt werden.

4. Verfahren nach einem der Ansprüche 1 oder 2,
**dadurch gekennzeichnet, dass**, wenn der Zug nicht beschleunigt wird, die Zusatzgeräte mit erhöhter Leistung betrieben werden.

5. Verfahren nach einem der Ansprüche 1 bis 4,
**dadurch gekennzeichnet, dass** beim Bremsen des Zuges die in der Traktionseinrichtung generatorisch erzeugte elektrische Energie zur Versorgung der Zusatzgeräte bereitgestellt wird.

6. Verfahren nach einem der Ansprüche 1 bis 5,
**dadurch gekennzeichnet, dass** das Steuern über ein Steuergerät erfolgt, das über Funk und/oder über eine Signalleitung Signale von einer Steuereinheit der Traktionseinrichtung erhält.
